(19) **Europäisches Patentamt**

**European Patent Office**

**Office européen des brevets**

(11) **EP 1 388 732 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
**G01M 1/10** *(2006.01)*

(21) Anmeldenummer: **03016287.9**

(22) Anmeldetag: **18.07.2003**

(54) **Verfahren zur Bestimmung des Massenträgheitsmomentes eines elektromotorischen Antriebssystems**

Method for determining the moment of inertia of an electromotive drive system

Procédé pour déterminer le couple d'inertie d'un système d'entraînement à moteur électrique

(84) Benannte Vertragsstaaten:
**AT BE BG CH CY CZ DE DK EE ES FI FR GB GR HU IE IT LI LU MC NL PT RO SE SI SK TR**

(30) Priorität: **08.08.2002 DE 10236847**

(43) Veröffentlichungstag der Anmeldung:
**11.02.2004 Patentblatt 2004/07**

(73) Patentinhaber: **Dr. Johannes Heidenhain GmbH 83292 Traunreut (DE)**

(72) Erfinder:
• **Kerner, Norbert**
  **83374 Traunwalchen (DE)**
• **Kellner, Eugen**
  **83471 Berchtesgaden (DE)**

(56) Entgegenhaltungen:
**DE-A- 2 802 224      FR-A- 2 631 988**
**US-A- 4 202 205      US-A- 4 607 408**

## Beschreibung

Die Erfindung betrifft ein Verfahren zur Bestimmung des Massenträgheitsmomentes eines elektromotorischen Antriebssystems für eine Werkzeugmaschine.

Für die Beurteilung der dynamischen Maschinenauslegung muss das Verhältnis des Motor-Massenträgheitsmomentes (welches sich auf den Antriebsmotor im engeren Sinne, d.h. auf dessen Läufer, bezieht und bei einem rotierenden Antrieb gleich dem Massenträgheitsmoment des Rotors ist) zum Last-Massenträgheitsmoment (welches sich auf die übrigen Komponenten des elektromotorischen Antriebs, wie z.B. eine Kupplung, eine Kugelumlaufspindel, weitere Getriebeelemente, einen durch den Antrieb bewegbaren Tisch usw., bezieht) bekannt sein. Das Motor-Massenträgheitsmoment und das Last-Massenträgheitsmoment müssen in einem bestimmten Verhältnis zueinander stehen, um eine hohe Regelgüte bei der Regelung eines elektromotorischen Antriebs zu erreichen.

Der Quotient aus Motor-Massenträgheitsmoment und Last-Massenträgheitsmoment ist eine maßgebende Größe zur Beurteilung der Regelbarkeit sowie der zu erwartenden Regelgüte eines elektromotorischen Antriebssystems. Befindet sich der Quotient außerhalb desjenigen Bereiches, in dem er eine Regelung hoher Güte ermöglicht, so führen Maßnahmen zur weiteren Regeloptimierung häufig nicht zum gewünschten Erfolg. Darüber hinaus lässt sich aus dem (Gesamt-) Massenträgheitsmoment des Antriebssystems, d.h. der Summe aus Motor-Massenträgheitsmoment und Last-Massenträgheitsmoment, unter Berücksichtigung des Maximalstromes des Antriebsmotors auch die maximal erreichbare Beschleunigung des Motors berechnen. Üblicherweise wird für den Quotienten aus Motor-Massenträgheitsmoment und Last-Massenträgheitsmoment ein Wert zwischen 1 und 2 angestrebt. Dies wird bei der Herstellung einer Maschine, Werkzeugmaschine, in der Regel zwar bereits vom Hersteller berücksichtigt. Jedoch führen nachträgliche Änderungen von Randbedingungen, wie z.B. die nachträgliche Änderung einer Komponente der Maschine, zu Änderungen des Quotienten, so dass dieser einen Wert außerhalb des gewünschten Bereiches annehmen kann. Dies kann wiederum dazu führen, dass nach der Vornahme von Änderungen an einer Werkzeugmaschine ein anderer Antriebsmotor verwendet werden muss, um die Regelbarkeit des Antriebs mit einer hinreichenden Regelgüte zu ermöglichen.

Da der Wert des Motor-Massenträgheitsmomentes des Antriebsmotors im engeren Sinne in der Regel bekannt ist und eine konstante Größe darstellt (soweit nicht am Antriebsmotor selbst Veränderungen vorgenommen werden), genügt es, das Massenträgheitsmoment des elektromotorischen Antriebs insgesamt zu bestimmen. Wird hiervon das Motor-Massenträgheitsmoment abgezogen, so erhält man als Ergebnis das Last-Massenträgheitsmoment, was wiederum die Berechnung des Ist-Wertes des Quotienten aus Motor-Massenträgheitsmoment und Last-Massenträgheitsmoment gestattet.

Gemäß der US 4607408 wird die Beladung einer Trommel einer Waschmaschine durch die Ermittlung eines Massenträgheitsmoments der beladenen Waschmaschinentrommel bestimmt. Das darin beschriebene Verfahren liefert einen relativ ungenaue Größe eines entsprechenden Massenträgheitsmoments.

Aus der US 4202205 ist ein Verfahren zur Bestimmung des Massenträgheitsmoments eines Körpers bekannt, wie es für Zwecke in der Raumfahrttechnik eingesetzt wird. Dieses Verfahren ist nicht dazu geeignet das Massenträgheitsmoment eines elektromotorischen Antriebssystems einer Werkzeugmaschine auf einfache Weise zu bestimmen.

In der EP 0827 265 B1 ist ein Regelungskonstanten-Bestimmungssystem eines elektrischen Motors für den Antrieb einer Werkzeugmaschine zum Bestimmen von Regelungskonstanten beschrieben, mit dem unter anderem das Massenträgheitsmoment bestimmt werden kann. Dabei wird ein iteratives Verfahren angewandt, welches auf einem Korrekturmodell unter Einbeziehung von Regelabweichungen bei der Regelung des Motors beruht. Ein iteratives Verfahren hat jedoch stets den Nachteil, das es hinsichtlich seiner Genauigkeit begrenzt ist und zudem aufgrund seiner Fehleranfälligkeit nicht zwingend für alle Betriebszustände zu einem optimalen Ergebnis führt.

Der Erfindung liegt daher das Problem zugrunde, ein neues, verbessertes Verfahren zur Bestimmung des Massenträgheitsmomentes eines elektromotorischen Antriebssystems für eine Werkzeugmaschine, zur Verfügung zu stellen.

Dieses Problem wird erfindungsgemäß durch ein Verfahren mit den Merkmalen des Patentanspruchs 1 gelöst.

Danach wird zunächst ein Kompensationsstrom des Antriebssystems bestimmt, der bei konstanter Motorgeschwindigkeit auftretende Verluste kompensiert, und zwar in der Weise, dass bei konstanter Motorgeschwindigkeit kein weiterer Strombedarf zusätzlich zum Kompensationsstrom besteht. Anschließend wird der Beschleunigungsstrom bestimmt, der eine definierte (konstante) Motorbeschleunigung erzeugt, wenn die bei konstanter Motorgeschwindigkeit auftretenden Verluste kompensiert sind. Aus diesem Beschleunigungsstrom wird schließlich das Massenträgheitsmoment berechnet.

Mit der erfindungsgemäßen Lösung wird eine analytische Methode zur Bestimmung des Massenträgheitsmomentes eines elektromotorischen Antriebs zur Verfügung gestellt, mit welcher das Massenträgheitsmoment aus dem Beschleunigungsstrom bestimmt wird, der eine definierte Motordrehzahl erzeugt, wenn die bei konstanter Motorgeschwindigkeit (Motordrehzahl) auftretenden Verluste kompensiert sind. D.h., bei dem Beschleunigungsstrom handelt es sich um einen Strom, der ausschließlich eine Beschleunigung des Motors bewirkt. Diejenigen Anteile des Stromes, die zur Kompensation von Verlusten bei konstanter Motorgeschwindigkeit, insbesondere Reibungs- und Ummagnetisierungsverlusten, dienen, werden als Kompensationsstrom separat von dem Beschleunigungsstrom betrachtet.

Voraussetzung für die Berechnung des Massenträgheitsmomentes aus dem Beschleunigungsstrom ist also die vorhergehende Bestimmung des Kompensationsstromes, der zum Betrieb des Antriebes mit konstanter Motorgeschwindigkeit erforderlich ist. Dieser wird ermittelt, indem der Antrieb bei mindestens zwei unterschiedlichen Motorgeschwindigkeiten betrieben wird, die jeweils während eines vorgegebenen Zeitraumes konstant sind und vorzugsweise den gleichen Betrag, aber entgegengesetztes Vorzeichen aufweisen. Hieraus lässt sich der Kompensationsstrom bestimmen, der benötigt wird, um die Motorgeschwindigkeit konstant auf einem vorgegebenen Wert zu halten, der also die beim Betrieb des Antriebs mit konstanter Motorgeschwindigkeit auftretenden Verluste vollständig kompensiert, so dass keine Abnahme der Motorgeschwindigkeit aufgrund von Verlusten erfolgt.

In einer bevorzugten Weiterbildung der Erfindung wird der Antrieb zur Bestimmung des Kompensationsstromes mit vier unterschiedlichen Motorgeschwindigkeiten betrieben, von denen jeweils zwei gleichen Betrag, aber entgegengesetztes Vorzeichen aufweisen.

Wenn dem elektromotorischen Antrieb eine Regeleinrichtung zugeordnet ist, mit der die Drehzahl des Antriebsmotors geregelt wird, dann entspricht der Kompensationsstrom dem Vorsteuerstrom, mit dem der Drehzahlregler die Verluste kompensiert, die beim Betrieb des Antriebs mit konstanter Motorgeschwindigkeit auftreten. Der Betrieb eines elektromotorischen Antriebs mit Geschwindigkeitsvorsteuerung ist bekannt; hierfür wird beispielhaft auf den Heidenhain-Prospekt zur Bahnsteuerung iTNC 530 (Mai 2002) verwiesen.

Bei einem geregelten Antriebssystem werden also zur Bestimmung des Massenträgheitsmomentes nur solche Größen benötigt, die zur Regelung des Antriebs ohnehin erforderlich sind. Es sind also keine zusätzlichen Größen erforderlich, die speziell zur Ermittlung des Massenträgheitsmomentes bestimmt werden müssen.

Zur Bestimmung des Beschleunigungsstromes wird der Antrieb vorzugsweise bei zwei unterschiedlichen Motorbeschleunigungen betrieben, die jeweils für einen vorgegebenen Zeitraum konstant sind und entgegengesetztes Vorzeichen aufweisen. Der Beschleunigungsstrom ist hierbei derjenige Strom, der allein zur Motorbeschleunigung erforderlich ist, also die Differenz des insgesamt beim Betrieb des elektromotorischen Antriebs erforderlichen Stroms (totaler Momentenstrom) und des für die Kompensation von Verlusten benötigten Stromes (Kompensationsstrom bzw. Vorsteuerstrom).

Zur Berechnung des Massenträgheitsmomentes aus dem Beschleunigungsstrom wird die Motorbeschleunigung einerseits in Abhängigkeit von dem Beschleunigungsstrom und andererseits in Abhängigkeit von dem Massenträgheitsmoment dargestellt, und es werden diese beiden Formulierungen der Motorbeschleunigung gleichgesetzt. Die entsprechende Gleichung kann dann nach dem Massenträgheitsmoment aufgelöst werden, so dass sich eine Formel für das Massenträgheitsmoment in Abhängigkeit von dem zuvor gemessenen Beschleunigungsstrom ergibt.

Zur Darstellung der Motorbeschleunigung in Abhängigkeit von dem Beschleunigungsstrom kann bei einem geregelten elektromotorischen Antrieb die sogenannte Beschleunigungsvorsteuerung herangezogen werden, die als konstanter Parameter das Verhältnis von Beschleunigungsstrom und Motorbeschleunigung, insbesondere Winkelbeschleunigung, angibt. Die Beschleunigungsvorsteuerung ist also ein Maß dafür, welcher Beschleunigungsstrom erforderlich ist, um eine bestimmte Motorbeschleunigung zu erreichen. Wie weiter oben beschrieben, lässt sich diese Größe bestimmen, wenn der Kompensationsstrom bekannt ist, also diejenigen Anteile des totalen Momentenstromes, die zur Kompensation von Verlusten bei konstanter Motorbeschleunigung erforderlich sind.

Zur Darstellung der Motorbeschleunigung in Abhängigkeit von dem Massenträgheitsmoment wird das physikalische Gesetz herangezogen, wonach die Beschleunigung gleich dem Quotienten aus dem wirkenden Antriebsmoment (z.B. dem Drehmoment) und dem Trägheitsmoment des Antriebs ist. Das elektrische Antriebsmoment lässt sich hierbei wiederum darstellen als Produkt aus dem Beschleunigungsstrom und einer Motorkonstante, die im Fall eines rotierenden Antriebsmotors als Drehmomentkonstante bezeichnet wird. Hieraus ergibt sich die Darstellung der Motorbeschleunigung in Abhängigkeit von dem Massenträgheitsmoment.

Ist das Massenträgheitsmoment des Antriebssystems insgesamt bestimmt, so kann hieraus das Last-Massenträgheitsmoment berechnet werden, indem von dem Massenträgheitsmoment des Antriebssystems das (bekannte, konstante) Motor-Massenträgheitsmoment abgezogen wird. Dies ermöglicht wiederum die Berechnung des Quotienten aus Motor-Massenträgheitsmoment und Last-Massenträgheitsmoment. Dieser Quotient wird dann mittels einer Ausgabeeinrichtung, z.B. optisch (mittels eines Bildschirms, eines Druckers oder dergl.) oder akustisch, angezeigt, so dass der Quotient unmittelbar zur Verfügung steht und überprüft werden kann, ob dieser als wichtige Kenngröße für die Regelbarkeit des Antriebssystems innerhalb eines bestimmten, vorteilhaften Wertebereiches liegt.

Das erfindungsgemäße Verfahren eignet sich nicht nur für elektromotorische Antriebe von Maschinen, die einen Läufer in Form eines Rotors antreiben, sondern auch für Antriebe mit einem Linearmotor und sogenannte Direktantriebe.

Weitere Merkmale und Vorteile der Erfindung werden bei der nachfolgenden Beschreibung eines Ausführungsbeispieles anhand der Figuren deutlich werden.

Es zeigen:

Fig. 1 - eine schematische Darstellung eines Verfahrens zur Bestimmung des Massenträgheitsmomentes eines elektromotorischen Antriebssystems in einem Flussdiagramm;

Fig. 2 - eine Darstellung des beim Betrieb eines Antriebsmotors einer Werkzeugmaschine auftretenden Stromes;

Fig. 3 - eine Darstellung gemäß Figur 2, wobei zusätzlich der Beschleunigungsstrom dargestellt ist, der nach Kompensation von Verlusten die Motorbeschleunigung bewirkt.

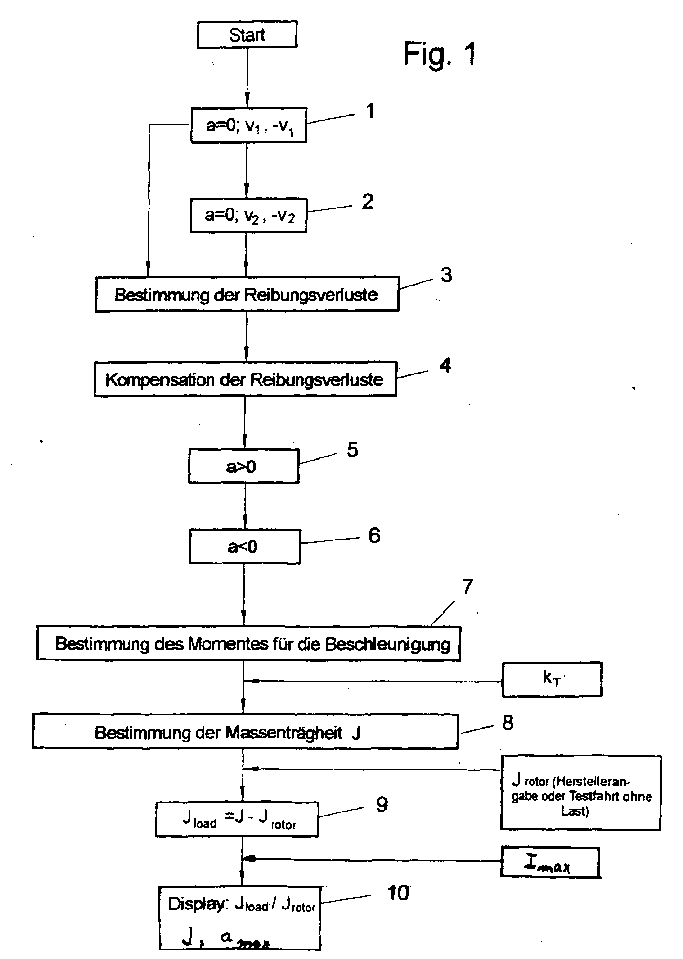

Die nachfolgende Erläuterung eines Ausführungsbeispiels des erfindungsgemäßen Verfahrens anhand der Figuren 1 bis 3 geht aus von einem elektromotorischen Antriebssystem für eine Werkzeugmaschine, das einen Antriebsmotor sowie dem Antriebsmotor nachgeschaltete Komponenten, wie z.B. eine Kupplung, eine Kuppelumlaufspindel, Getriebeelemente und einen translatorisch zu bewegenden Tisch der Werkzeugmaschine umfasst. Durch Bestimmung des resultierenden Massenträgheitsmomentes dieses Antriebssystems lässt sich der Quotient aus dem Motor-Massenträgheitsmoment und dem Last-Massenträgheitsmoment bestimmen. Denn bei dem Motor-Massenträgheitsmoment handelt es sich um eine Konstante, die für den jeweiligen Motortyp bekannt ist und üblicherweise vom Hersteller angegeben wird. Indem von dem Massenträgheitsmoment des Antriebssystems insgesamt das Motor-Massenträgheitsmoment abgezogen wird, ergibt sich das Last-Massenträgheitsmoment. Dies ermöglicht wiederum die Bestimmung des Quotienten aus Motor-Massenträgheitsmoment und Last-Massenträgheitsmoment.

Gemäß den ersten beiden Schritten 1, 2 des Flussdiagrames aus Figur 1 wird der Antriebsmotor zunächst auf eine erste konstante Geschwindigkeit $v_1$ beschleunigt und bei dieser Geschwindigkeit für einen vorgegebenen Zeitraum betrieben sowie anschließend gebremst und auf die entgegengesetzte gleiche Geschwindigkeit $-v_1$ beschleunigt und bei dieser Geschwindigkeit wiederum für einen vorgegebenen Zeitraum betrieben. Daraufhin wird der Antrieb auf eine kleinere Geschwindigkeit $v_2$ beschleunigt und bei dieser wiederum für einen vorgegebenen Zeitraum betrieben sowie danach gebremst und auf die entgegengesetzt gleiche Geschwindigkeit $-v_2$ beschleunigt und bei dieser wiederum für einen vorgegebenen Zeitraum betrieben.

Bei den Geschwindigkeiten $v_1$, $-v_1$ handelt es sich um einen typischen Bearbeitungsvorschub der entsprechenden Werkzeugmaschine, die jeweils für einen gewissen Zeitraum mit diesem Vorschub betrieben wird. Die einander entgegengesetzten Geschwindigkeiten $v_1$, $-v_1$ entsprechen dabei jeweils einem Vorschub mit gleicher Geschwindigkeit aber in entgegengesetzter Richtung.

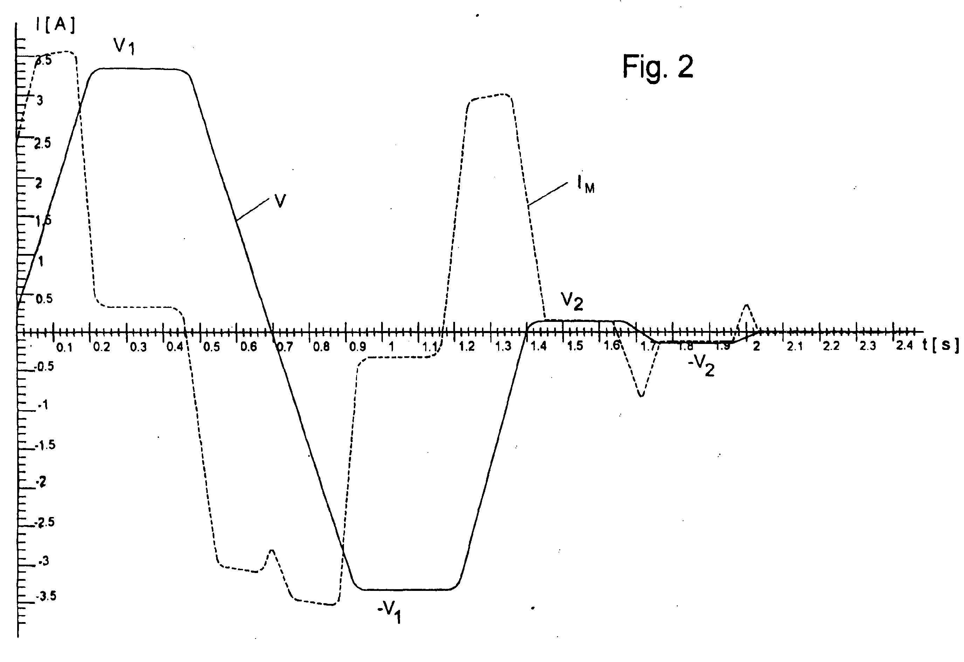

In Figur 2 ist die Motorgeschwindigkeit v des Antriebs in Abhängigkeit von der Zeit t dargestellt. Es sind insbesondere vier Bereiche mit unterschiedlicher konstanter Geschwindigkeit $v_1$, $-v_1$, $v_2$ sowie $-v_2$ erkennbar, die den vorstehend erläuterten Motorgeschwindigkeiten entsprechen. Ferner ist in Figur 2 in Abhängigkeit von der Zeit der totale Momentenstrom $I_M$ dargestellt, der erforderlich ist, um die vier unterschiedlichen konstanten Motorgeschwindigkeiten $v_1$, $-v_1$, $v_2$ sowie $-v_2$ zu erreichen, sowie jeweils für einen definierten Zeitraum auf einem konstanten Niveau zu halten. In dem resultierenden Momentenstrom $I_M$ sind sowohl Beschleunigungsanteile enthalten, also solche Stromanteile, die eine Beschleunigung zur Änderung der Motorgeschwindigkeit bewirken, als auch Verlust-Anteile, die zur Kompensation von Reibungsverlusten sowie weiteren, drehzahlabhängigen Verlusten, wie z.B. Ummagnetisierungsverlusten, erforderlich sind. Dies wird daran deutlich, dass gemäß Figur 2 auch bei einem Betrieb des Antriebs mit konstanter Geschwindigkeit $v_1$, $-v_1$, $v_2$ oder $-v_2$ der resultierende Momentenstrom des Antriebsmotors jeweils ungleich null ist. Es ist also ein gewisser Strom (Kompensationsstrom) erforderlich, um durch Kompensation von Verlusten eine konstante Motorgeschwindigkeit und somit einen konstanten Vorschub der Werkzeugmaschine aufrechtzuerhalten.

Die beim Betrieb des Antriebsmotors mit konstanter Geschwindigkeit auftretenden Verluste sowie der zur Kompensation dieser Verluste erforderliche Strom lassen sich in einem nächsten Verfahrensschritt 3 bestimmen, indem der sogenannte Integralstrom während der Konstantfahrphasen des Antriebsmotors bzw. der Werkzeugmaschine ausgewertet wird, also während derjenigen Phasen, in denen die Motorgeschwindigkeit bzw. der Vorschub der Werkzeugmaschine jeweils konstant ist. Bei dem Integralstrom handelt es sich um den totalen Momentenstrom vermindert um den Proportionalanteil des Stromes (Rauschen). Dies ermöglicht die Einstellung 4 eines Vorsteuerstromes, der die bei konstanter Motorgeschwindigkeit auftretenden Reibungsverluste und weitere, drehzahlabhängige Verluste kompensiert.

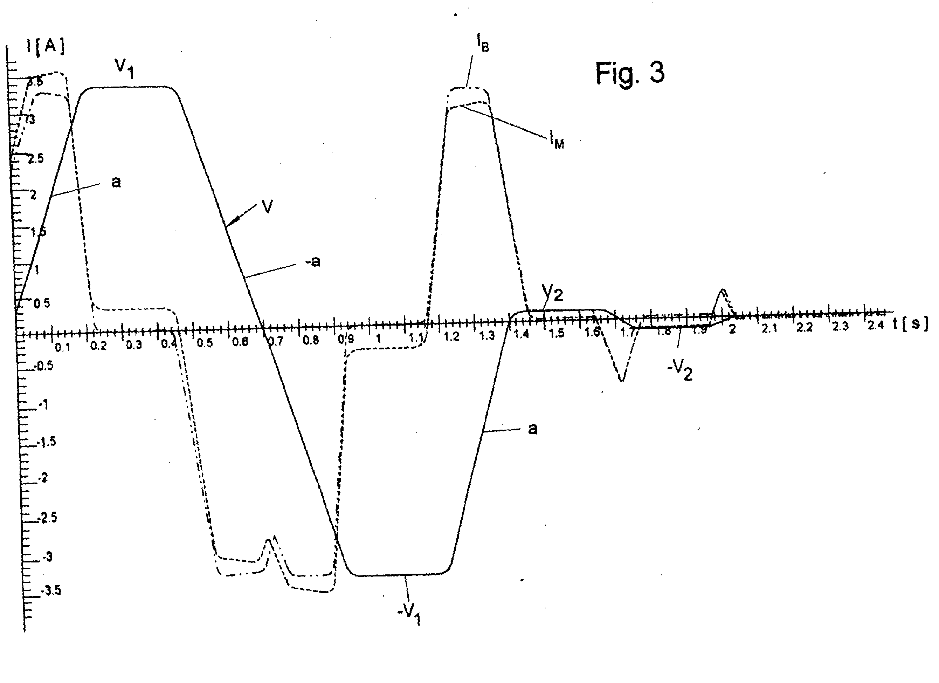

Bei einer weiteren Testfahrt wird in den beiden darauffolgenden Schritten 5, 6 des erfindungsgemäßen Verfahrens die Werkzeugmaschine wiederum nacheinander mit den vier unterschiedlichen, oben erwähnten Motorgeschwindigkeiten ($v_1$, $-v_1$, $v_2$ sowie $-v_2$) betrieben. In Figur 3 sind für diese zweite Testfahrt wiederum die Motorgeschwindigkeit v, der resultierende Momentenstrom $I_M$ sowie zusätzlich der Beschleunigungsstrom $I_B$ dargestellt. Es ist erkennbar, dass der Beschleunigungsstrom $I_B$ jeweils dann gleich null ist, wenn die Geschwindigkeit v konstant ist. Der Beschleunigungsstrom $I_B$ enthält daher nur diejenigen Stromanteile, die zur Antriebsbeschleunigung erforderlich sind. Die Kompensation von Verlusten erfolgt durch eine mittels der Regeleinrichtung des Antriebs einstellbare Geschwindigkeitsvorsteuerung.

Der elektromotorische Antrieb wird bei der zweiten Testfahrt durch die zugeordnete Regeleinrichtung derart betrieben, dass die Beschleunigung in den Phasen, in denen die Motorgeschwindigkeit auf einen ersten Wert (z.B. $v_1$) eingestellt bzw. von einem ersten Wert ($v_1$) auf einen zweiten Wert (-$v_1$) geändert wird, jeweils konstant ist, also (abgesehen von der jeweiligen Anfangs- bzw. Endphase der Beschleunigung) einen konstanten Wert a bzw. -a aufweist. Durch Auswertung des Beschleunigungsstromes $I_B$ während der Phasen mit konstanter Motorsbeschleunigung a bzw. -a lässt sich ermitteln, welcher Beschleunigungsstrom $I_B$ zur Aufrechterhaltung einer bestimmten, konstanten Motorbeschleunigung a bzw. -a erforderlich ist.

Dies ermöglicht nun in einem weiteren Verfahrensschritt 7 die Bestimmung der sogenannten Beschleunigungsvorsteuerung FF. Hierbei handelt es sich um einen konstanten Parameter, der angibt, welcher Beschleunigungsstrom $I_B$ während einer Beschleunigungsphase fließen muss, um eine bestimmte Winkelbeschleunigung $\alpha$ des Antriebsmotors zu erreichen. Es gilt: FF = $2\pi * I_B/\alpha$. Dies lässt sich nach der Winkelbeschleunigung $\alpha$ auflösen und es folgt: $\alpha = 2\pi * I_B/$ FF.

Andererseits lässt sich nach den physikalischen Gesetzen für eine Drehbewegung die Winkelbeschleunigung auch darstellen als $\alpha$ = M/J. Hierbei ist M das elektrische Drehmoment des Antriebsmotors, für welches gilt: M = $k_T * I_B$. Darin ist $k_T$ die Drehmomentkonstante des Antriebsmotors. Somit ergibt sich als zweite Formel für die Winkelbeschleunigung $\alpha = k_T * I_B$ /J.

Durch Gleichsetzen der beiden obigen Formeln für die Winkelbeschleunigung folgt: $k_T$/J = $2\pi$/FF. Diese Gleichung lässt sich nach dem Massenträgheitsmoment J auflösen, so dass

$$J = k_T * FF/2\pi.$$

Damit ist das Massenträgheitsmoment J dargestellt als Funktion der Drehmomentkonstante $k_T$ des Antriebsmotors, die durch die Konstruktion und Werkstoffauswahl des Motors bestimmt ist, sowie als Funktion der Beschleunigungsvorsteuerung FF, die in den vorhergehenden Verfahrensschritten 1 bis 6 bestimmt worden ist.

Nach Bestimmung 8 des Massenträgheitsmomentes J des Antriebssystems der Werkzeugmaschine kann nun in einfacher Weise der Quotient aus dem Motor-Massenträgheitsmoment und dem Last-Massenträgheitsmoment berechnet werden. Hierzu wird ausgenutzt, dass sich das gesamte Massenträgheitsmoment eines Antriebssystems additiv aus dem Massenträgheitsmoment $J_M$ des Antriebsmotors im engeren Sinn und dem Last-Massenträgheitsmoment $J_L$ zusammensetzt. Das Last-Massenträgheitsmoment $J_L$ ergibt sich wiederum additiv aus Beiträgen, die von der Kupplung, Kuppelumlaufspindel, Getriebeelementen sowie z.B. einem translatorisch bewegbaren Tisch der Werkzeugmaschine herrühren. Demnach gilt $J_L$ = J - $J_M$, wobei das Motor-Massenträgheitsmoment $J_M$ in der Regel bekannt ist. Gegebenenfalls kann dieses Motor-Massenträgheitsmoment $J_M$ in gleicher Weise bestimmt werden wie das Massenträgheitsmoment des Antriebssystems insgesamt, indem die vorstehend beschriebenen Testfahrten für den Antriebsmotor ohne Last, also für dessen Läufer (Rotor), durchgeführt und in der gleichen Weise ausgewertet werden wie oben beschrieben.

Für einen drehenden Antriebsmotor ist das Motor-Massenträgheitsmoment gleich dem Massenträgheitsmoment des Rotors.

Nach der Bestimmung 9 des Last-Massenträgheitsmomentes aus dem zuvor ermittelten gesamten Massenträgheitsmoment J und dem Motor-Massenträgheitsmoment $J_M$, ergibt sich schließlich im letzten Schritt 10 der gesuchte Quotient $J_M/J_L$ aus Motor-Massenträgheitsmoment und Last-Massenträgheitsmoment.

Ebenso wird aus dem Maximalstrom $I_{max}$, der ohnehin als Zahlenwert in der Maschinensteuerung vorliegt, die maximale Beschleunigung $a_{max}$ des Motors bestimmt. Einem Benutzer wird dann der gesuchte Quotient zusammen mit dem Massenträgheitsmoment J des Antriebssystems und der maximalen Beschleunigung $a_{max}$ des Motors direkt an einem Bildschirm ausgegeben. Der Benutzer kann also ohne aufwändige (manuell durchgeführte) eigene Berechnungen direkt den Quotienten $J_M/J_L$ aus Motor-Massenträgheitsmoment und Last-Massenträgheitsmoment ablesen, wobei keine Input-Daten vom Benutzer verlangt werden, die nicht ohnehin für den Betrieb der Steuerung des Antriebssystems erforderlich wären.

Wie weiter oben angegeben, wurde für die Berechnung des resultierenden Massenträgheitsmomentes J aus dem Beschleunigungsstrom bzw. der Beschleunigungsvorsteuerung die Drehmomentkonstante $k_T$ des entsprechenden Antriebsmotors verwendet. Diese lässt sich aus dem Stillstandsdrehmoment $M_0$ und dem Stillstandsstrom $I_0$ des Antriebsmotors berechnen; $k_T$ = $M_0/I_0$.

Falls das Stillstandsdrehmoment nicht bekannt sein sollte, so lässt sich die Drehmomentkonstante durch Gleichsetzung der elektrischen Motorleistung und der mechanischen Motorleistung berechnen. Es gilt für die elektrische Motorleistung eines DreiPhasen-Drehstrommotors im Stern-Ersatzschaltbild: $P_{el}$ = 3 * U * I mit U = n * $U_c$, wobei $U_c$ die drehzahlabhängige Spannungskonstante und n die Drehzahl des Antriebsmotors ist. Für die mechanische Motorleistung gilt: $P_{mech}$ = M * $\Omega$, mit M = $k_T$ * I und $\Omega$ = $2\pi$ * n.

Durch Gleichsetzen der elektrischen mit der mechanischen Motorleistung ergibt sich also 3 * n * $U_c$ * I = $2\pi$ * $k_T$ * n * I. Es folgt also $k_T$ = 3 * $U_c/2\pi$, wobei $U_c$ = $U_0/\sqrt{3}$ * $n_{Pol}/F_n$. Dabei sind $U_0$ (Leerlaufspannung des Antriebsmotors, entsprechend der Effektivspannung zwischen den Phasen), $n_{Pol}$ (Polpaarzahl Antriebsmotors) sowie $F_n$ (Nennfrequenz) jeweils konstante Parameter.

Im Ergebnis ermöglicht das erfindungsgemäße Verfahren eine direkte, analytische Bestimmung des Verhältnisses von Motor-Massenträgheitsmoment und Last-Massenträgheitsmoment eines Antriebssystems einer Werkzeugmaschine.

Dieser Quotient ist ein wichtiges Hilfsmittel bei der Beurteilung der Maschinenachse einer Werkzeugmaschine über ein (externes) Abgleichwerkzeug. Darüber hinaus kann er zur adaptiven Nachführung der Reglerparameter einer Regeleinrichtung des Antriebssystems sowie der Vorsteuerung dienen. Wird beispielsweise beim Betrieb einer Werkzeugmaschine festgestellt, dass sich während der Beschleunigungsphasen der zur Einstellung einer bestimmten Beschleunigung erforderliche Momentenstrom ändert, so erfolgen nach dem vorstehend beschriebenen Verfahren eine Neubestimmung der Beschleunigungsvorsteuerung sowie des Gesamt-Massenträgheitsmomentes. Die Regelfaktoren werden dann entsprechend (insbesondere proportional) der Änderung des Massenträgheitsmomentes ebenfalls verändert. Dadurch wird die Dynamik des Antriebssystems konstant gehalten.

**Patentansprüche**

1. Verfahren zur Bestimmung des Massenträgheitsmomentes eines elektromotorischen Antriebssystems einer Werkzeugmaschine, das einen Antriebsmotor und weitere dem Antriebsmotor nachgeordnete Antriebselemente umfasst und dem eine Regeleinrichtung zugeordnet ist, bei dem

   a) ein Kompensationsstrom bestimmt wird, der bei konstanter Motorgeschwindigkeit auftretende Verluste kompensiert, so dass die Motorgeschwindigkeit ($v$) konstant bleibt,
   b) der Beschleunigungsstrom ($I_B$) bestimmt wird, der eine definierte Motorbeschleunigung ($a$) erzeugt, wenn die bei konstanter Motorgeschwindigkeit ($v$) auftretenden Verluste kompensiert sind,
   c) die Drehmomentkonstante ($k_T$) des Antriebsmotors berechnet wird, und
   d) aus dem Beschleunigungsstrom ($I_B$) und der berechneten Drehmomentkonstante ($k_T$) das Massenträgheitsmoment ($J$) berechnet wird.

2. Verfahren nach Anspruch 1, **dadurch gekennzeichnet, dass** zur Bestimmung des Kompensationsstromes der zum Betrieb des Antriebes bei konstanter Motorgeschwindigkeit ($v$) erforderliche Strom ($I_M$) bei mindestens einer Motorgeschwindigkeit, vorzugsweise bei mindestens zwei unterschiedlichen Geschwindigkeiten ($v_1$, -$v_1$; $v_2$, -$v_2$), ermittelt wird.

3. Verfahren nach Anspruch 2, **dadurch gekenn-** zeichnet, dass die mindestens eine Geschwindigkeit ($v_1$, -$v_1$; $v_2$, -$v_2$) während eines vorgebbaren Zeitraumes konstant ist.

4. Verfahren nach Anspruch 2 oder 3, **dadurch gekennzeichnet, dass** die beiden Geschwindigkeiten ($v_1$, -$v_1$; $v_2$, -$v_2$) den gleichen Betrag aber entgegengesetztes Vorzeichen aufweisen.

5. Verfahren nach Anspruch 4, **dadurch gekennzeichnet, dass** der Antriebsmotor zur Bestimmung des Kompensationsstromes nacheinander mit vier unterschiedlichen Geschwindigkeiten ($v_1$, -$v_1$; $v_2$, -$v_2$) betrieben wird, von denen jeweils zwei den gleichen Betrag aber entgegengesetztes Vorzeichen aufweisen.

6. Verfahren nach einem der vorhergehenden Ansprüche, **dadurch gekennzeichnet, dass** die Drehmomentkonstante ($k_T$) durch Gleichsetzung der elektrischen Motorleistung ($P_{el}$) und der mechanischen Motorleistung ($P_{mech}$) berechnet wird.

7. Verfahren nach Anspruch 6, **dadurch gekennzeichnet, dass** die Drehmomentkonstante ($k_T$) basierend auf der Leerlaufspannung ($U_0$), der Polpaarzahl ($n_{Pol}$) sowie der Nennfrequenz ($F_n$) des Antriebsmotors berechnet wird.

8. Verfahren nach einem der vorhergehenden Ansprüche, **dadurch gekennzeichnet, dass** die Drehzahl des Antriebsmotors geregelt wird.

9. Verfahren nach Anspruch 8, **dadurch gekennzeichnet, dass** der Kompensationsstrom durch einen Vorsteuerstrom des Drehzahlreglers gebildet wird, mit dem Verluste kompensiert werden, die beim Betrieb des Antriebsmotors mit konstanter Motorgeschwindigkeit ($v$) auftreten.

10. Verfahren nach einem der vorhergehenden Ansprüche, **dadurch gekennzeichnet, dass** zur Bestimmung des Beschleunigungsstromes ($I_B$) der Antriebsmotor bei zwei unterschiedlichen Beschleunigungen ($a$, -$a$) betrieben wird.

11. Verfahren nach Anspruch 10, **dadurch gekennzeichnet, dass** die beiden Beschleunigungen ($a$, -$a$) unterschiedliches Vorzeichen aufweisen.

12. Verfahren nach Anspruch 10 oder 11, **dadurch gekennzeichnet, dass** die Beschleunigung ($a$, -$a$) jeweils für einen vorgebbaren Zeitraum konstant bleibt.

13. Verfahren nach einem der vorhergehenden Ansprüche, **dadurch gekennzeichnet, dass** der Beschleunigungsstrom ($I_B$) durch die Differenz des totalen Momentenstroms ($I_M$) des Antriebsmotors und des Kompensationsstroms gebildet wird.

14. Verfahren nach einem der vorhergehenden Ansprüche, **dadurch gekennzeichnet, dass** zur Berechnung des Massenträgheitsmomentes ($J$) aus dem Beschleunigungsstrom ($I_B$) die Motorbeschleunigung ($a$) einerseits in Abhängigkeit von dem Beschleunigungsstrom ($I_B$) und andererseits in Abhängigkeit von dem Massenträgheitsmoment ($J$) dargestellt wird und die beiden Formulierungen der Motorbeschleunigung ($a$) gleichgesetzt werden.

15. Verfahren nach einem der vorhergehenden Ansprüche, **dadurch gekennzeichnet, dass** das Last-Massenträgheitsmoment ($J_L$) des Antriebssystems aus der Differenz des totalen Massenträgheitsmomentes ($J$) des Antriebssystems und dem Massenträgheitsmoment ($J_M$) des Antriebsmotors bestimmt wird.

16. Verfahren nach Anspruch 15, **dadurch gekennzeichnet, dass** das Verhältnis des Motor-Massenträgheitsmomentes zum Last-Massenträgheitsmoment berechnet wird.

17. Verfahren nach Anspruch 16, **dadurch gekennzeichnet, dass** der Quotient aus Motor-Massenträgheitsmomentes und Last-Massenträgheitsmoment mittels einer Ausgabeeinrichtung angezeigt wird.

## Claims

1. Method for determining the mass moment of inertia of an electromotive drive system of a machine tool which comprises a drive motor and further drive elements arranged after the drive motor and to which a control device is assigned, in which

   a) a compensation current is determined which compensates for losses occurring at constant motor speed, so that the motor speed ($v$) remains constant,
   b) the acceleration current ($I_B$) is determined which produces a defined motor acceleration ($a$) when the losses occurring at constant motor speed ($v$) are compensated for,
   c) the moment of rotation constant ($k_T$) of the drive motor is calculated, and
   d) from the acceleration current ($I_B$) and the calculated moment of rotation constant ($k_T$), the mass moment of inertia ($J$) is calculated.

2. Method according to claim 1, **characterised in that**, in order to determine the compensation current, the current ($I_M$) which is required for operation of the drive at constant motor speed ($v$) is determined at at least one motor speed, preferably at at least two different speeds ($v_1$, $-v_1$; $v_2$, $-v_2$).

3. Method according to claim 2, **characterised in that** the at least one speed ($v_1$, $-v_1$; $v_2$ $-v_2$) is constant during a prescribable period of time.

4. Method according to claim 2 or 3, **characterised in that** the two speeds ($v_1$, $-v_1$; $v_2$, $-v_2$) have the same value but opposing signs.

5. Method according to claim 4, **characterised in that**, for determination of the compensation current, the drive motor is operated at four different speeds ($v_1$, $-v_1$; $v_2$, $-v_2$) in succession, of which two respectively have the same value but opposing signs.

6. Method according to one of the preceding claims, **characterised in that** the moment of rotation constant ($k_T$) is calculated by equating the electrical motor power ($P_{el}$) and the mechanical motor power ($P_{mech}$).

7. Method according to claim 6, **characterised in that** the moment of rotation constant ($k_T$), based on the no-load voltage ($U_0$), the number of pole pairs ($n_{Pol}$) and also the nominal frequency ($F_n$) of the drive motor is calculated.

8. Method according to one of the preceding claims, **characterised in that** the rotational speed of the drive motor is controlled.

9. Method according to claim 8, **characterised in that** the compensation current is formed by a pilot current of the rotational speed controller, with which pilot current losses which occur during operation of the drive motor at constant motor speed ($v$) are compensated for.

10. Method according to one of the preceding claims, **characterised in that,** for determination of the acceleration current ($I_B$), the drive motor is operated at two different accelerations ($a$, $-a$).

11. Method according to claim 10, **characterised in that** the two accelerations ($a$, $-a$) have different signs.

12. Method according to claim 10 or 11, **characterised in that** the acceleration ($a$, $-a$) respectively remains constant for a prescribable period of time.

13. Method according to one of the preceding claims, **characterised in that** the acceleration current ($I_B$) is formed by the difference of the total moment current ($I_M$) of the drive motor and of the compensation current.

**14.** Method according to one of the preceding claims, **characterised in that**, for calculation of the mass moment of inertia (J) from the acceleration current ($I_B$), the motor acceleration (a) is represented on the one hand as a function of the acceleration current ($I_B$) and on the other hand as a function of the mass moment of inertia (J) and the two formulations of the motor acceleration (a) are equated.

**15.** Method according to one of the preceding claims, **characterised in that** the load mass moment of inertia ($J_L$) of the drive system is determined from the difference of the total mass moment of inertia (J) of the drive system and from the mass moment of inertia ($J_M$) of the drive motor.

**16.** Method according to claim 15, **characterised in that** the ratio of the motor mass moment of inertia to the load mass moment of inertia is calculated.

**17.** Method according to claim 16, **characterised in that** the quotient of the motor mass moment of inertia and the load mass moment of inertia is displayed by means of an output device.

**Revendications**

**1.** Procédé pour déterminer le couple d'inertie d'un système d'entraînement à moteur électrique d'une machine-outil, qui comprend un moteur d'entraînement ainsi que des éléments d'entraînement disposés à la suite dudit moteur d'entraînement et auquel est associé un dispositif de régulation, selon lequel

> a) on détermine un courant de compensation qui compense les pertes apparaissant à vitesse moteur constante, de manière telle que la vitesse moteur (v) reste constante,
> b) on détermine le courant d'accélération ($I_B$) qui produit une accélération moteur (a) définie, lorsque les pertes apparaissant à vitesse moteur (v) constante sont compensées,
> c) on calcule la constante de couple ($k_T$) du moteur d'entraînement et,
> d) on calcule le couple d'inertie (J) à partir du courant d'accélération ($I_B$) et de la constante de couple ($k_T$) calculée.

**2.** Précédé selon la revendication 1, **caractérisé par le fait que** pour déterminer le courant de compensation, on mesure le courant ($I_M$) nécessaire pour faire fonctionner le système d'entraînement à vitesse moteur (v) constante sous au moins une vitesse moteur, de préférence sous au moins deux vitesses moteur ($v_1$, $-v_1$ ; $v_2$, $-v_2$) différentes.

**3.** Précédé selon la revendication 2, **caractérisé par**

**le fait que** la vitesse ($v_1$, $-v_1$ ; $v_2$, $-v_2$) au nombre d'au moins une est constante pendant un laps de temps prédéterminé.

**4.** Précédé selon la revendication 2 ou 3, **caractérisé par le fait que** les deux vitesses ($v_1$, $-v_1$ ; $v_2$, $-v_2$) ont la même valeur, mais avec des signes opposés.

**5.** Précédé selon la revendication 4, **caractérisé par le fait que** pour déterminer le courant de compensation, on fait fonctionner le moteur d'entraînement successivement sous quatre vitesses ($v_1$, $-v_1$ ; $v_2$, $-v_2$) différentes, parmi lesquelles chaque fois deux ont la même valeur mais avec des signes opposés.

**6.** Précédé selon une des revendications précédentes, **caractérisé par le fait que** la constante de couple ($k_T$) est calculée en posant la puissance moteur électrique ($P_{el}$) égale à la puissance moteur mécanique ($P_{mech}$).

**7.** Précédé selon la revendication 6, **caractérisé par le fait que** la constante de couple ($k_T$) est calculée à partir de la tension à vide ($U_O$), du nombre de paires de pôles ($n_{Pol}$) et de la fréquence nominale ($F_n$) du moteur d'entraînement.

**8.** Précédé selon une des revendications précédentes, **caractérisé par le fait que** la vitesse de rotation du moteur d'entraînement est régulée.

**9.** Précédé selon la revendication 8, **caractérisé par le fait que** le courant de compensation est formé par un courant de commande anticipée, à l'aide duquel sont compensées les pertes qui apparaissent lors du fonctionnement du moteur d'entraînement à vitesse moteur (v) constante.

**10.** Précédé selon une des revendications précédentes, **caractérisé par le fait que** pour déterminer le courant d'accélération ($I_B$), on fait fonctionner le moteur avec deux accélérations (a, -a) différentes.

**11.** Précédé selon la revendication 10, **caractérisé par le fait que** les deux accélérations (a, -a) sont de signe différent.

**12.** Précédé selon la revendication 10 ou 11, **caractérisé par le fait que** l'accélération (a, -a) reste constante pendant un laps de temps prédéterminé.

**13.** Précédé selon une des revendications précédentes, **caractérisé par le fait que** le courant d'accélération ($I_B$) est formé par la différence du courant de couple ($I_M$) total du moteur d'entraînement et du courant de compensation.

**14.** Précédé selon une des revendications précédentes, **caractérisé par le fait que** pour calculer le couple d'inertie (J) à partir du courant d'accélération ($I_B$), on représente l'accélération moteur (a) d'une part en fonction du courant d'accélération ($I_B$) et d'autre part en fonction du couple d'inertie (J) et on pose les deux formulations égales à l'accélération moteur (a).

15. Précédé selon une des revendications précédentes, **caractérisé par le fait qu'**on détermine le couple d'inertie de la charge ($J_L$) du système d'entraînement à partir de la différence du couple d'inertie (J) total du système d'entraînement et du couple d'inertie ($J_M$) du moteur d'entraînement.

16. Précédé selon la revendication 15, **caractérisé par le fait qu'**on calcule le rapport du couple d'inertie du moteur au couple d'inertie de la charge.

17. Précédé selon la revendication 16, **caractérisé par le fait que** le quotient du couple d'inertie du moteur et du couple d'inertie de la charge est indiqué à l'aide d'un dispositif d'édition.

## Fig. 1

Start

$a=0; v_1, -v_1$ — 1

$a=0; v_2, -v_2$ — 2

Bestimmung der Reibungsverluste — 3

Kompensation der Reibungsverluste — 4

$a>0$ — 5

$a<0$ — 6

Bestimmung des Momentes für die Beschleunigung — 7

$k_T$

Bestimmung der Massenträgheit J — 8

J rotor (Herstelleran-gabe oder Testfahrt ohne Last)

$J_{load} = J - J_{rotor}$ — 9

$I_{max}$

Display: $J_{load} / J_{rotor}$ — 10

$J, a_{max}$

Fig. 2

EP 1 388 732 B1

Fig. 3

EP 1 388 732 B1